(19) **Europäisches Patentamt**

**European Patent Office**

**Office européen des brevets**

(11) Veröffentlichungsnummer : **0 252 106 B1**

(12) # EUROPÄISCHE PATENTSCHRIFT

(45) Veröffentlichungstag der Patentschrift :
24.07.91 Patentblatt 91/30

(21) Anmeldenummer : 87900126.1

(22) Anmeldetag : 13.12.86

(86) Internationale Anmeldenummer :
PCT/EP86/00749

(87) Internationale Veröffentlichungsnummer :
WO 87/03971 02.07.87 Gazette 87/14

(51) Int. Cl.⁵ : **G03B 23/02**

(54) **BILDETRACHTUNGSGERÄT.**

(30) Priorität : 20.12.85 DE 3545164

(43) Veröffentlichungstag der Anmeldung :
13.01.88 Patentblatt 88/02

(45) Bekanntmachung des Hinweises auf die
Patenterteilung :
24.07.91 Patentblatt 91/30

(84) Benannte Vertragsstaaten :
AT BE CH DE FR GB IT LI NL SE

(56) Entgegenhaltungen :
EP-A- 0 113 057

(73) Patentinhaber : Licinvest AG
Hartbertstrasse 9
CH-7002 Chur (CH)

(72) Erfinder : ACKERET, Peter
Allmendstrasse 18
CH-8700 Küsnacht (CH)

(74) Vertreter : Sparing Röhl Henseler
Patentanwälte European Patent Attorneys
Rethelstrasse 123
W-4000 Düsseldorf 1 (DE)

## Beschreibung

Die Erfindung betrifft ein Bildbetrachtungsgerät mit den im Oberbegriff des Patentanspruchs 1 genannten Merkmalen. Derartige Geräte sind beispielsweise in den US-Patentschriften 4.238.898, 4.238.899, 4.241.528, 4.241.529, 4.245.417, 4.259.802 und 4.376.348 offenbart.

Bei den bekannten Bildwechslern ist das Verhältnis der Volumina des Bilderstapels einerseits, des Geräts andererseits nicht konstant, da für die Wechselfunktion bestimmte Mindestabmessungen rings um den Stapel einzuhalten sind. je kleiner also die Bildfläche ist, desto ungünstiger wird das Verhältnis. Hat man eine größere Bildersammlung unterzubringen, etwa eine umfangreiche Fotothek, so wird der zusätzliche Platzbedarf, wenn alle Bilder in Bildwechslern untergebracht werden, gegebenenfalls stören. Andererseits bieten die Bildwechsler nicht nur den Vorteil bequemer Betrachtung, sondern auch den, daß eine einmal vorgenommene Einordnung erhalten bleibt, weil das Umschichten zyklisch erfolgt.

Aufgabe der vorliegenden Erfindung ist es, ein Betrachtungsgerät der im Oberbegriff des Patentanspruchs 1 genannten Gattung zu schaffen, bei dem der Gesamtplatzbedarf für eine größere Anzahl von Bilderstapeln verringert werden kann, ohne die Vorteile des umschichtenden Betrachtungsgeräts aufzugeben.

Die erfindungsgemäß zur Lösung dieser Aufgabe vorgesehene Lösung ist im kennzeichnenden Teil des Patentanspruchs 1 definiert; die Unteransprüche definieren vorteilhafte Weiterbildungen dieses Konzepts.

Man erkennt, daß im Gegensatz zu den bekannten Betrachtungsgeräten hier drei Komponenten vorgesehen sind, von denen die beiden Rahmenteile primär die Aufgabe haben, den "Antrieb" der Wechselfunktion zu ermöglichen, und die Kassette primär die Aufgabe hat, den Bilderstapel auch außerhalb des Betrachtungsgeräts zusammenzuhalten. Die Verteilung der übrigen Funktionen -- und damit der zugehörigen baulichen Komponenten -- ist in unterschiedlicher Weise möglich, wie anhand der nachstehend beschriebenen Ausführungsbeispiele deutlich werden wird.

Fig. 1 stellt eine Draufsicht auf ein erstes Ausführungsbeispiel dar, teilweise aufgeschnitten gezeichnet,

Fig. 2 ist ein Längsschnitt durch das Betrachtungsgerät nach Fig. 1,

Fig. 3 zeigt perspektivisch die Kassette aus Fig. 1 und Fig. 2,

Fig. 4 bzw. 5 zeigen im Längsschnitt bzw. in perspektivischer Darstellung die Kassette eines zweiten Ausführungsbeispiels,

Fig. 6 zeigt perspektivisch einen Teil des Schieber-Rahmenteils,

Fig. 7 zeigt im Längsschnitt das Betrachtungsgerät mit der Kassette nach Fig. 4/5,

Fig. 8 stellt perspektivisch die Kassette einer weiteren Ausführungsform dar,

Fig. 9 zeigt die Öffnungsseite des zugehörigen Gehäuses in perspektivischer Darstellung,

Fig. 10 bzw. 11 zeigen die Teile gemäß Fig. 8 bzw. 9 im Längsschnitt, auseinandergezogen,

Fig. 12 zeigt analog Fig. 10/11 die Teile in zusammengeschobener Position,

Fig. 13 zeigt perspektivisch die Kassette einer weiteren Ausführungsform,

Fig. 14 zeigt im Längsschnitt das zugehörige Betrachtungsgerät, offen, mit Kassette bestückt,

Fig. 15 ist ein Querschnitt durch das geschlossene Gerät nach Fig. 14,

Fig. 16 ist eine Seitenansicht ähnlich Fig. 14, jedoch im geschlossenen Zustand,

Fig. 17 zeigt in Draufsicht ein Detail des Schiebers,

Fig. 18 ist ein Längsschnitt durch das Gerät nach Fig. 15 in auseinandergezogener Stellung der Rahmenteile,

Fig. 19 bzw. 20 zeigen unterschiedliche Funktionsstellungen des Schieberdetails nach Fig. 17 in Seitenansicht,

Fig. 21 stellt perspektivisch eine weitere Ausführungsform dar,

Fig. 22 bzw. 23 zeigen das Gerät im Querschnitt bzw. in längsgeschnittener Draufsicht,

Fig 24 und 25 sind erläuternde zugehörige Längsschnitte

Fig. 26 ist eine Draufsicht auf den zugehörigen Schieber,

Fig. 27 ist eine Deataildraufsicht zur Erläuterung der Funktion.

Bevor die Ausführungsbeispiele beschrieben werden, soll mit der gebotenen Kürze der Umschichtoder Wechselvorgang etwas näherbetrachtet werden. Im Prinzip ist das umzuschichtende Einzelbild parallel zu dem ihm im Stapel benachbarten zweiten Bild seitlich zu verlagern, bis es sich "neben" dem Stapel befindet. Dann ist es senkrecht zu seiner Hauptebene soweit zu verlagern, daß es auf der andern Stapelseite wieder parallel zu dessen Hauptebene hinter das letzte Bild des Stapels geschoben werden kann. Diese einzelnen Funktionen bedingen bestimmte Komponenten:

Für den ersten Schritt ist es erforderlich, das Einzelbild in Bewegung zu setzen. Hierfür sind Mittel vorgesehen, die als "Zufuhreinrichtung" bezeichnet werden. Dabei ist dafür zu sorgen, daß die Zuführeinrichtung genau ein einziges Bild fördert, das zweite jedoch beim Stapel verbleibt. Hierfür ist eine "Trenneinrichtung" vorgesehen, die z.B. als ein Durchlaß mit Abmessungen für nur ein Bild ausgebildet sein kann. Während es weiteren Wechselvorgangs wird das abgetrennte Einzelbild eim einen, das andere im andern Rahmenteil festgehalten, wofür eine "Halteeinrichtung" vorgesehen ist. Und schließlich ist eine "Führungseinrichtung" vorgesehen, die das Einzelbild auf die andere Stapelseite verlagert und seine Rückführung ermöglicht. Es ist anzumerken, daß Komponenten vorhanden sein können, die mehrere Funktionen ausführen, also z.B. zuerst als Zufuhreinrichtung arbeiten, im weiteren Verlauf des WEchselzyklus als Halteeinrichtung, oder daß ein Teil der Trenneinrichtung zugleich als Reststapel-Halteeinrichtung dient, usw.

In der nachfolgenden Beschreibung der Ausführungsbeispiele wird der Einfachheit halber stets das mit dem Sichtfenster versehene Rahmenteil als "Gehäuse", das andere Rahmenteil als "Schieber" bezeichnet, gleichgültig, welches der beiden Bauteile erstes oder zweites Rahmenteil ist.

Ferner gilt für alle dargestellten Ausführungsbeispiele, daß die beschriebenen und gezeichneten Komponenten aus warmverformbaren Kunststoff bestehen mitAusnahme der ständig unter Federvorspannung stehenden Teile ; diese bestehen aus einer geeigneten Metallegierung.

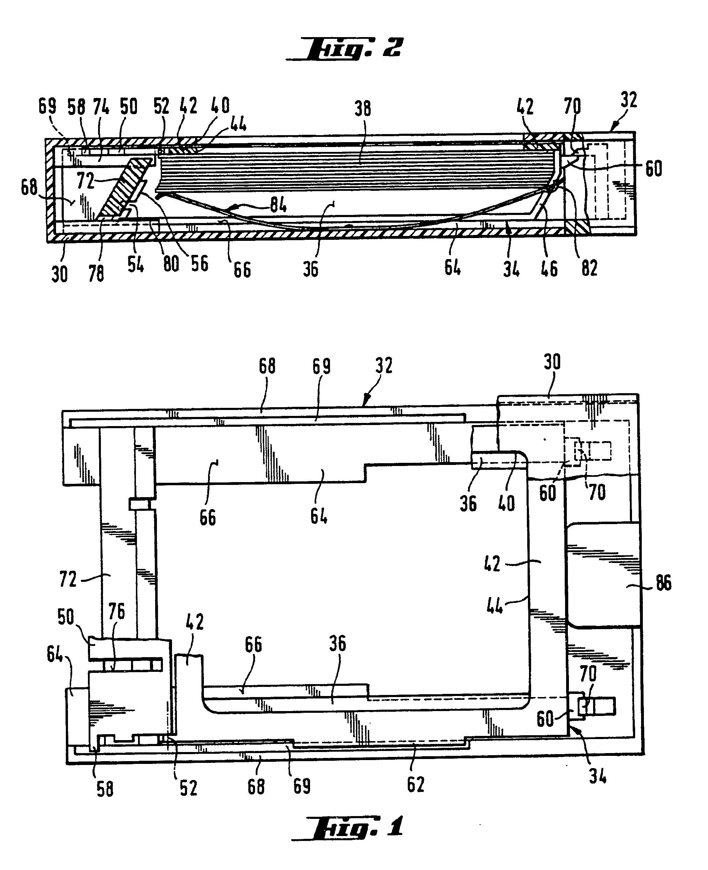

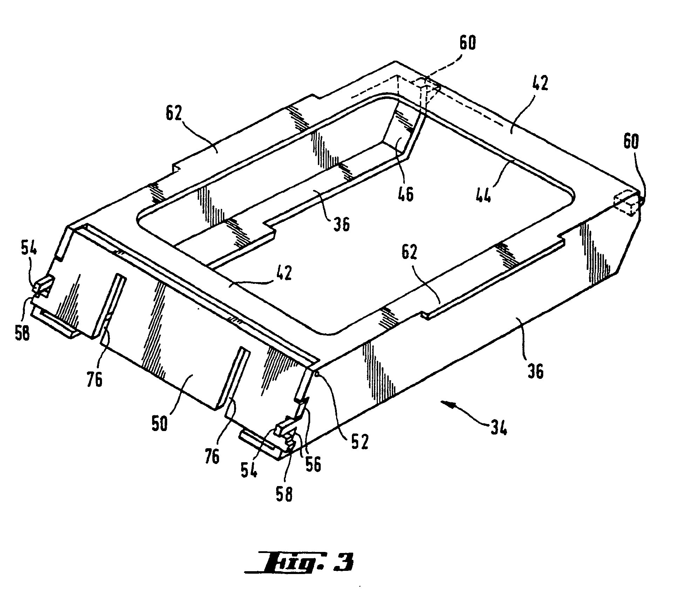

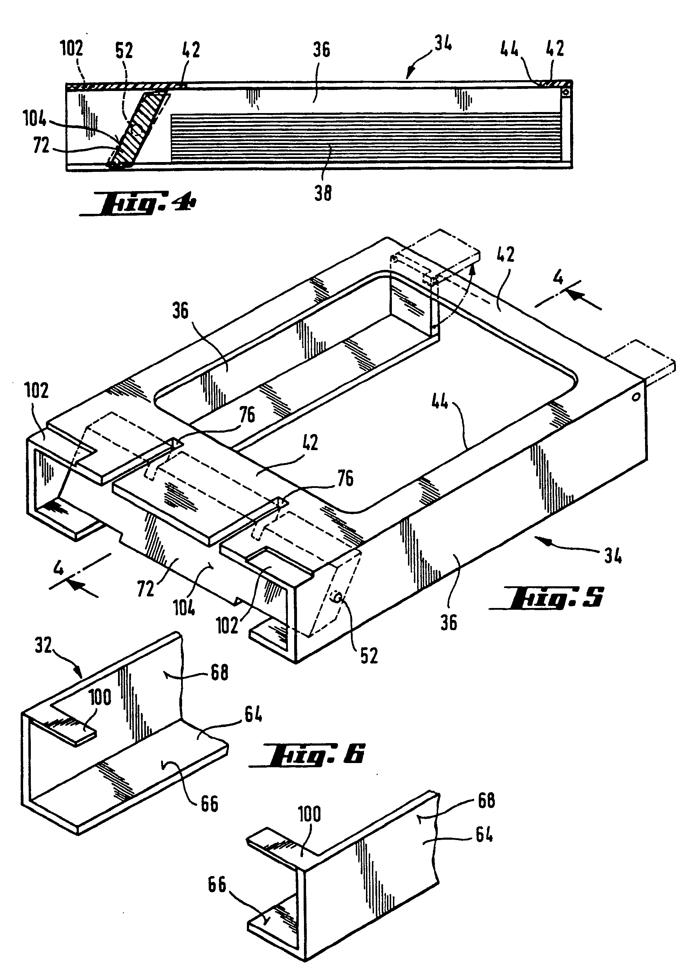

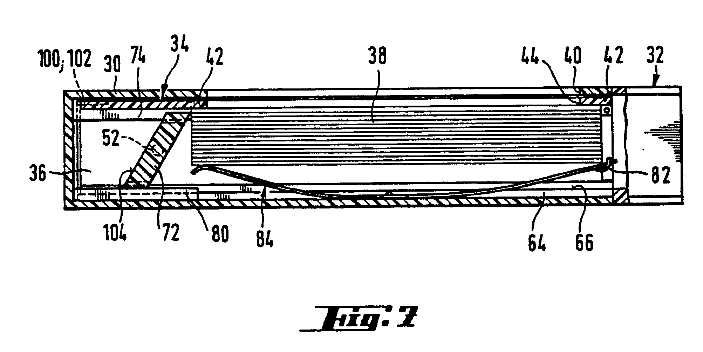

Fig. 1 bis 3 zeigen ein erstes Ausführungsbeispiel. Das Gerät umfaßt ein Gehäuse 30, einen Schieber 32 und eine in den Schieber einsetzbare Kassette 34. Die Kassette weist zwei Längsschenkel 36 mit U-förmigem Querschnitt auf, welche die Längskanten eines Bilderstapels 38 umgreifen und so zusammenhalten. Auf der im eingesetzten Zustand dem Sichtfenster 40 des Gehäuses zugekehrten Seite sind die Längsholme durch Querplatten 42 miteinander verbunden, so daß sich ein mit dem Fenster 40 kongruenter Ausschnitt 44 ergibt. Am einen, auszugsseitigen Kassettenende wird das Herausfallen des Stapels durch Endlappen 46 verhindert. Am anderen Ende weist die Kassette eine Öffnung auf, durch die hindurch ein Bilderstapel eingesetzt werden und entnommen werden kann ; diese Öffnung ist durch eine Klappe 50 abgedeckt, die um Zapfen 52 schwenkbar in den Längsholmen gelagert ist. Die Basisabschnitte der Längsholme weisen entsprechende Zapfenlöcher auf, und außerdem sind an der freien Endkante dieser Basisabschnitte Nasen 54 angeformt, die in entsprechende Ausschnitte der Klappe greifen, sowie Einsenkungen 56, die komplementär zu den Kantenpartien der Klappe verlaufen. Die letzteren sind noch mit zwei auswärts ragenden Vorsprüngen 58 versehen. An der der Klappe abgewandten Seite der Kassette sind an diese Haken 60 angeformt, und von der Oberseite der Kassette springen nach außen schmale Stege 62 vor. Der Schieber umfaßt im Querschnitt L-förmige Schieberholme 64 mit Basisschenkeln 66, auf denen die Kassette aufsitzt, und Stützschenkeln 68, die auf das Sichtfenster des Gehäuses zu gerichtet sind und Einsenkungen 69 aufweisen, in denen sich die Stege 62 sowie die Vorsprünge 58 der Klappe, nachdem diese geöffnet worden ist, verankern. Über die Haken 60 schnappen dabei Riegel 70 des Schiebers und verankern damit die Kassette im Schieber ; am andern Ende der Kassette greifen dabei die Nasen 54 in entsprechende Einschnitte der inneren Schieberquerwand, die hier die Form eines Separatorsteges 72 besitzt. An das Gehäuse sind innen Anschläge 74 angeformt, die das Hinundherbewegen des Schiebers mit eingesetzter Kassette jedoch nicht behindern, da sie durch Schlitze 76 der Kassettenklappe greifen können. Der Separatorsteg weist an seiner Unterseite gefederte Schuhe 78 auf, die mit einer im Gehäuse vorgesehenen Stufe 80 die Trenneinrichtung bilden. Haken 82 an einem Federpaar 84 bilden die Zufuhreinrichtung und halten zugleich ein an der Unterseite des Stapels abgezogenes Bild, das sich bei ganz herausgezogenem Schieber (nebst Kassette) vor die Anschläge 74 legt und beim Wiedereinschub des Schiebers zwischen der Oberseite des Separatorsteges und der Innenseite der Klappe hindurchgeschoben und auf den Stapel geführt wird.- Zum Entnehmen der Kassette werden die Riegel durch Verschieben einer an der Griffpartie 86 des Schiebers geführten Platte (nicht gezeigt) entriegelt, und die Klappe wird durch eine (nicht gezeigte) Feder automatisch verschlossen. Man erkennt, daß die Unsymmetrie der Kassette ihr Einsetzen nur in der richtigen Lage ermöglicht.

Bei dieser Ausführungsform dient die Kassette ausschließlich zum Zusammenhalten des Stapels ; sämtliche für den Wechselvorgang erforderlichen Komponenten befinden sich in den beiden Rahmenteilen. Die Kassette kann bei herausgezogenem Schieber in diesen eingesetzt oder aus ihm entnommen werden.

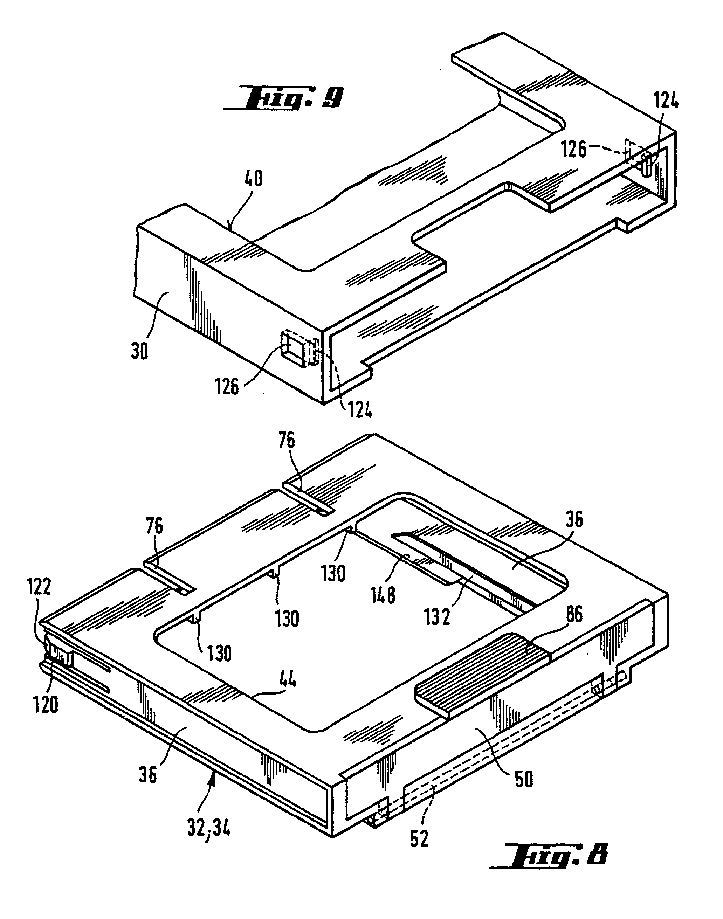

Die Ausführungsform nach Fig. 4 bis 7 unterscheidet sich von der nach Fig. 1 bis 3 dadurch, daß die Kassette 34 den Separatorsteg 72 enthält, schwenkbar um die Zapfen 52 und von einer (nicht gezeichneten) Feder in die in Fig. 4 mit ausgezogenen Linien dargestellte Position vorgespannt. Das Einfüllen eines Bilderstapels erfolgt demgemäß am andern Ende der Kassette 34, die zu diesem Zweck Schwenkklappen 50 aufweist, die sich in den bodenseitigen Schenkeln ihrer Längsholme verankern können, wenn die Kassette geschlossen wird ; so kann sie dann auch in den Schieber eingesetzt werden, wobei das innere Ende der Kassette dadurch gehalten wird, daß an den Separator angeformte Vorsprünge 100 in entsprechende komplementäre Ausnehmungen 102 der Kassette greifen. Dadurch wird auch der Separatorsteg 72 in die in Fig. 4 gestrichelt dargestellte Position verdreht und bildet zusammen mit der Gehäusestufe 80 die Trenneinrichtung.- Die Schlitze 76 für die gehäuseseitigen Anschläge 74 sind bei dieser Kassette in deren Deckwand vorgesehen.

Bei dieser Ausführungsform umfaßt die Kassette, im Gegensatz zu der zuerst beschriebenen Ausführungsform, auch Komponenten der Trenneinrichtung (nämlich die der Gehäusestufe zugekehrte, federvorgespannte Unterseite des Separatorstegs) sowie einen Teil der Leiteinrichtung, nämlich den schrägen Rücken 104 des Separatorstegs, längs dem die Kante des Einzelbildes aufwärts geführt wird. Die übrigen Komponenten des Wechselmechanismus dagegen befinden sich im Gehäuse.

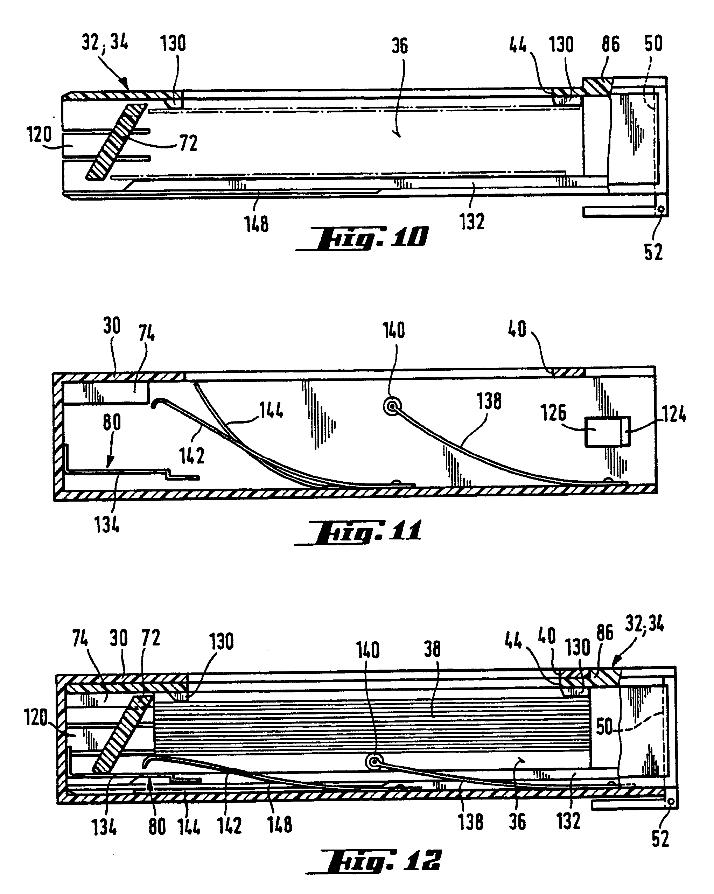

Bei der Ausführungsform nach Fig. 8 bis 12 besteht die Besonderheit, daß der Schieber 32 zugleich die Kassette 34 bildet ; demgemäß sind diese Bauteile in den Figuren mit beiden Bezugszeichen markiert. Der Schieber, der in den bisher beschriebenen Ausführungsbeispielen – und auch im Stand der Technik – zwar relativ zu dem Gehäuse hinundherverschieblich, jedoch nicht herausnehmbar war, kann hier als ganzes dem Gehäuse entnommen werden. Die Basisschenkel 36 der Längsholme sind beidseits einer Anschlagnase 120 geschlitzt, so daß diese nach innen einfedern kann, wenn das Schieber-Kassetten-Bauteil in das Gehäuse 30 eingeschoben wird und die Schrägen 122 der Nasen auf die Gegenanschläge 124 treffen, hinter denen die Nasen wieder ausfedern und den Auszugshub begrenzen. Zur Entnahme drückt man mit einer Nadel oder dergleichen von außen durch die Durchbrüche 126 auf die Nasen, so daß sie an den Gegenanschlägen 124 vorbeigehen können. Neben dem Separatorsteg 72 weist das Schieber-Kassetten-Bauteil 32/34 noch fensterseitige Niederhalter 130 auf, die verhindern, daß ein Bild bei entnommenem Bauteil aus dem Schlitz oberhalb des Separatorsteges herausfallen kann. Einem ähnlichen Zweck dienen die bodenseitigen Stützstege 132. Im Gehäuse befindet sich eine mit der Stufe 80 versehene Blattfeder 134, die zusammen mit dem Separatorsteg die Trenneinrichtung bildet. Die Zufuhreinrichtung wird von einer auf einer weiteren Feder 138 sitzenden, mit einem Haftbelag versehenen Rolle 140 gebildet, die in Auszugsrichtung blockiert, in Einschubrichtung jedoch drehbar ist, so daß sie beim Auszug das im Stapel 38 unterste Bild festhält. Bei eingeschobenen Rahmenteilen drückt diese Feder 138 zusammen mit einer weiteren Federanordnung 142 den Stapel in Richtung Sichtfenster. Wenn die Rolle 140 vom Separator niedergedrückt worden ist, hält eine weitere Blattfederanordnung 144 – die vorher von Kufen 148 des Schiebers 32/34 niedergedrückt gehalten worden ist – das vereinzelte Bild nach oben und klammert es am Gehäuse fest.

Die Klappe 50 ist an der dem Separatorsteg 72 gegenüberliegenden Seite angelenkt und rastet federnd unter der Griffplatte 86 ein.

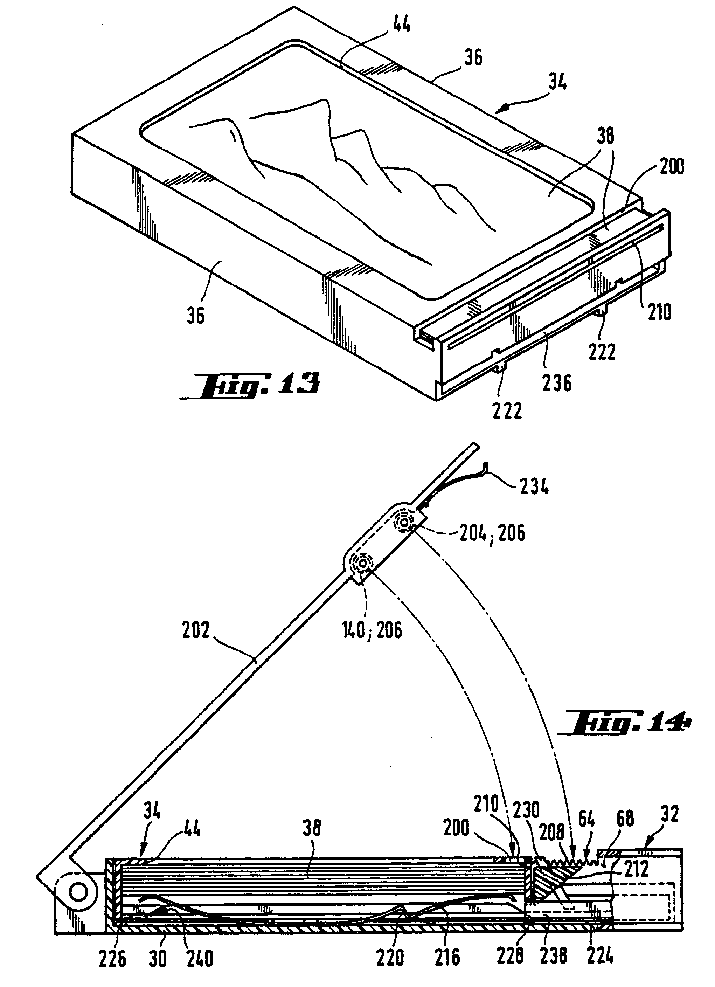

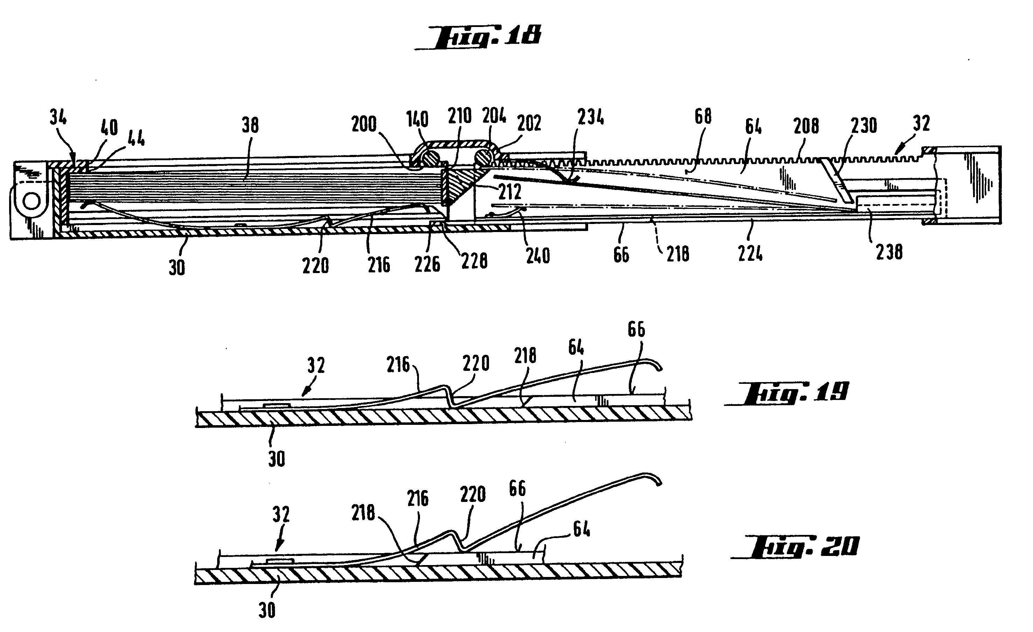

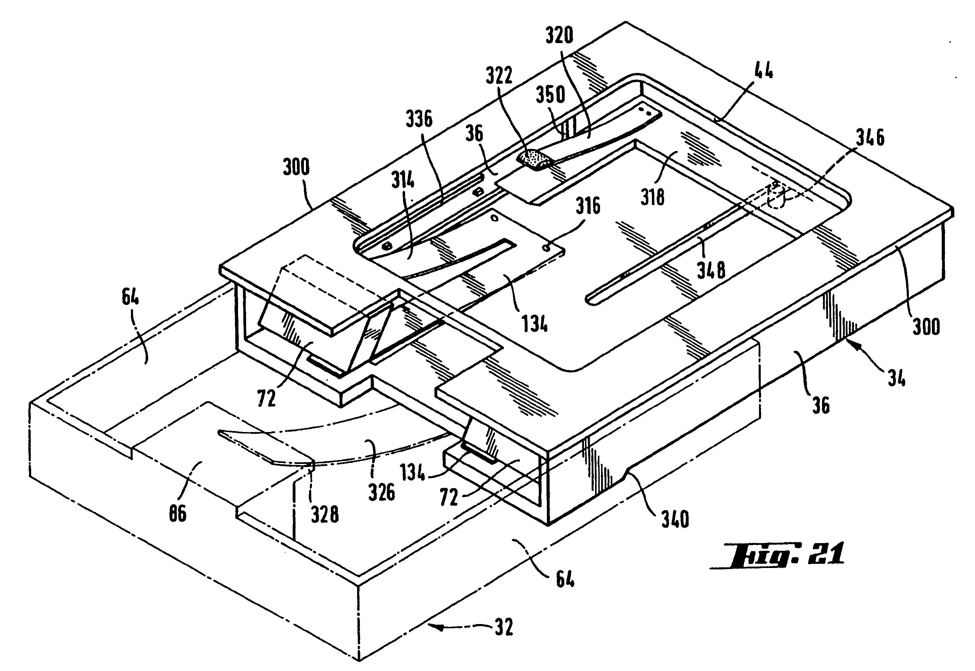

Bei der Ausführungsform nach Fig. 13 bis 20 wird die Kassette 34 in das Gehäuse 30 eingesetzt und dort formschlüssig verankert gehalten, was hier nicht noch einmal im Detail dargestellt ist, ebensowenig wie die Kassettenfüllöffnung mit Klappe. Neben ihrem Fensterausschnitt 44 weist die Kassette eine weitere Öffnung 200 auf, durch die hindurch eine mit einem Haftbelag versehene erste Rolle 140 in Kontakt mit dem in der Kassette oben freiliegenden Bild bringbar ist. Dies erfolgt durch Schließen des Gehäusedeckels 202, in dem neben der ersten Rolle 140 eine zweite, gleichartige Rolle 204 gelagert ist. Beide Rollen sind mit seitlichen Zahnkränzen 206 versehen, die mit den zahnstangenartig ausgebildeten Oberkanten 208 der Längsholme 64 des Schiebers 32 kämmen. Bei Zug an dem Schieber fördern die Rollen demnach dieses oberste Bild durch einen Kassettenaustritt 210, wobei am Gehäuse gegenüber der Rolle 204 eine Gegenstütze 212 vorgesehen ist. Während des Schiebereinschubs sind die Rollen durch eine (nicht gezeigte) Freilaufanordnung entkuppelt. Damit die erste Rolle 140 satt an dem Bild zur Anlage kommt, wird der Stapel 38 von einer Federanordnung 216 nach oben gedrückt, bis die zweite Rolle das Bild erfaßt hat ; zu diesem Zweck erhält die Federanordnung eine zusätzliche Vorspannung durch die Abstufung 218 am Schieberlängsholm die unter eine Federabwinklung 220 drückt, wenn der Schieber eingeschoben ist.

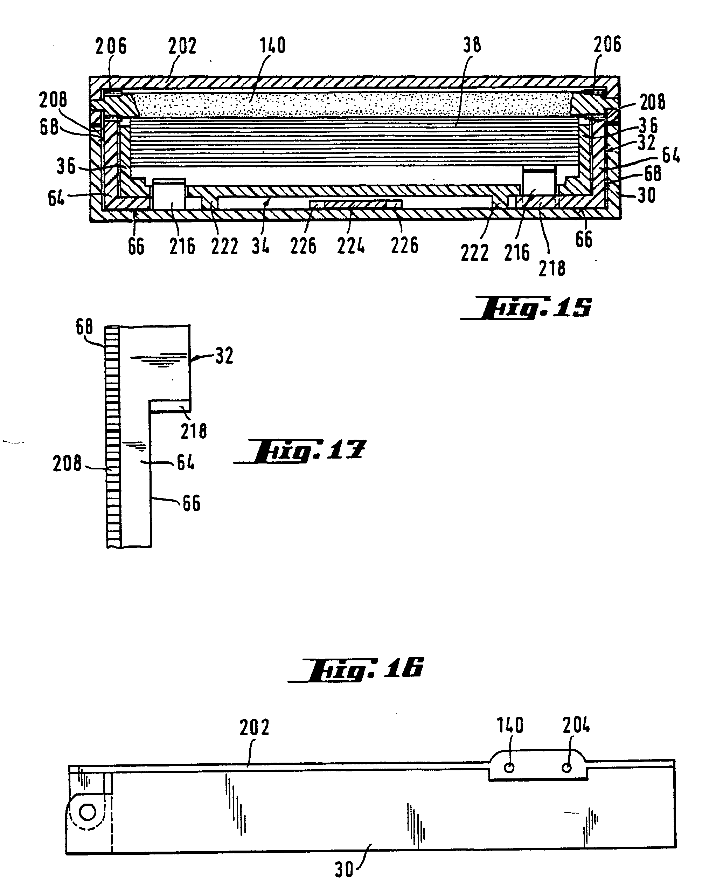

Die Kassette sitzt mit zwei Kufen 222 auf dem Gehäuseboden auf und bietet so Platz für die Schieberlängsholme 64 wie auch für einen in der Mitte des Schiebers vorgesehenen Steuersteg 224. Dieser Steuersteg ist um eine im Vergleich mit dem Schieberhub kurze Strecke relativ zum Schieber derart verlagerbar, daß er beim Auflaufen von seitlichen Nasen 226 auf gehäuseseitige Anschläge 228 gegenüber dem Schieber im Gehäuse zurückbleibt, beim Wiedereinschub des Schiebers aber wie zurückgedrückt wird in die in Fig. 14 angedeutete Position. An diesem Steuersteg befindet sich die schräge Leitfläche 230, die bei eingeschobener Position zwischen die Elemente der Gegenstütze 212 tritt. Während der letzten Millimeter des Schieberauszugs drückt die Leitfläche 230 die ihm zugekehrte Endkante des vereinzelten Bildes sanft nach unten, während die gegenüberliegende Kante von einer Hilfsfeder 234 nach unten gedrückt wird, bis sie vor dem Rückführschlitz 236 der Kassette liegt, durch den das Bild von dem schieberseitigen Anschlag 238 geschoben wird. Eine weitere Hilfsfederanordnung 240 zentriert dabei die Bildkante, während der Stapel in der Kassette hinreichend locker ist (wegen der abgebauten Vorspannung der Federanordnung 216 bei ausgezogenem Schieber), daß das Bild beim Einschub nicht gestaucht wird ; in diesem Zusammenhang wird besonders auf Fig. 15 aufmerksam gemacht, wo diese Federanordnung links inaktiv, rechts durch den Schieber aktiviert gezeichnet ist. Die Gegenstütze 212 weist auf ihrer Unterseite eine Schräge ähnlich der Schrägfläche 230 auf, längs der die Bildkante gleiten kann.

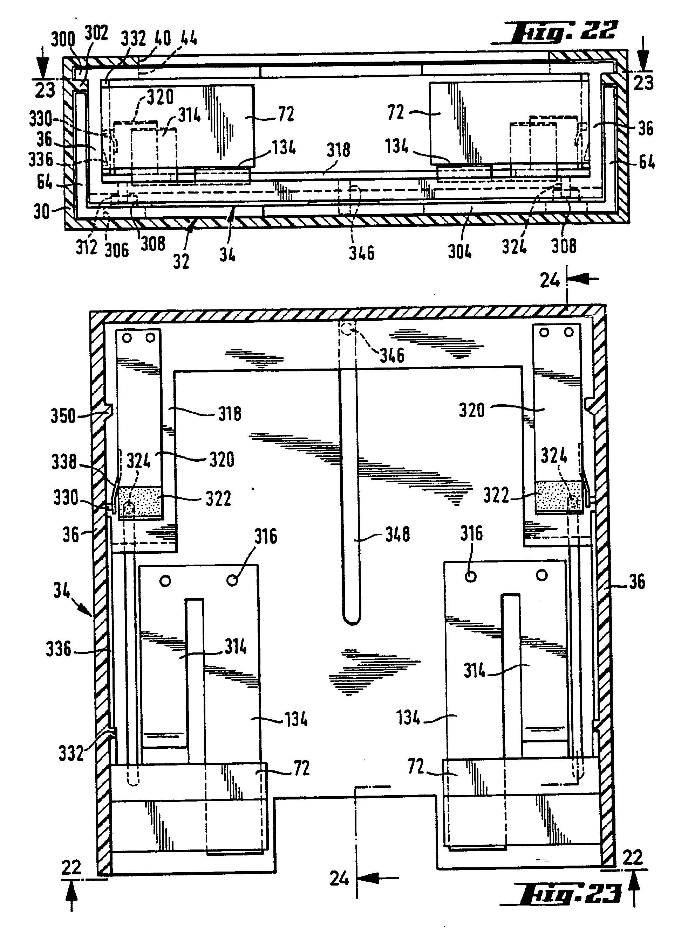

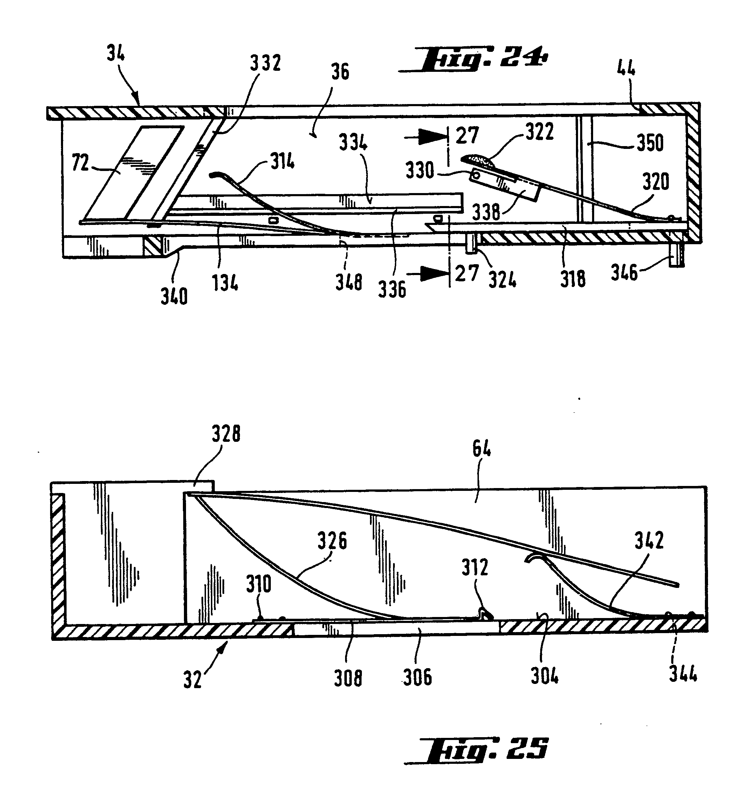

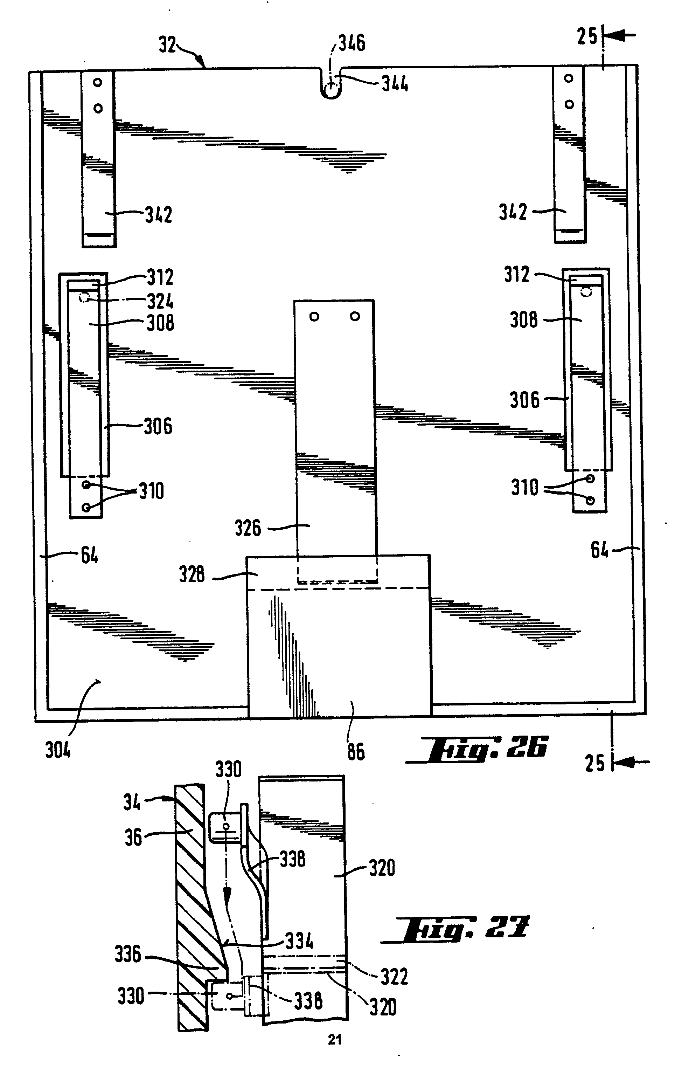

Bei der Ausführungsform nach Fig. 22 bis 27 enthält die Kassette eine Reihe von Funktionselementen für den Wechselvorgang. Die Kassette 34 wird stirnseitig auf der dem Schieber 32 abgewandten Seite des Gehäuses 30 eingeschoben und ruht mitseitlichen Schienen 300 auf gehäuseinneren Stegen 302, unter denen die Schieberholme 64 laufen. Der Schieber weist hier einen geschlossenen Boden 304 auf, abgesehen von Durchbrüchen 306, die Platz bieten für das Auslenken der Federarme 308, welche bei 310 am Schieber befestigt sind und Mitnehmerhaken 312 am freien Ende aufweisen. Die kassette ist mit Separatorflügeln 72 versehen, die gemeinsam mit Blattfederarmen 134 den Durchlaß der Trenneinrichtung begrenzen. Die Federarme 134 sind einstückig mit Stapelandruckfedern 314 ausgebildet und bei 316 an einem Boden der Kassette befestigt. In den Längsholmen 36 der Kassette seitlich geführt, enthält sie ein Gleitstück 318 mit etwa U-förmigem Umriß, wie in Fig. 21 erkennbar. Auf ihm sind zwei Federarme 320 befestigt, die einen am untersten Bild des in der Kassette befindlichen Stapels (nicht gezeichnet) mit Vorspannung anliegenden Haftbelag 322 tragen. Von dem Gleitstück 318 erstrecken sich durch Schlitze des Kassettenbodens außen neben den Federarmen 314 — in Fig. 21 nicht erkennbar — Mitnehmerzapfen 324, die bei eingeschobenem Schieber 32 von dessen Mitnehmerhaken 312 hintergriffen sind. Wird nun am Schieber gezogen, so wird auch das Gleitstück 318 mitgenommen, und dessen Haftbeläge führen das Bild, an dem sie anliegen, der Trenneinrichtung 72/134 zu. Jenseits derselben wird eine weitere, am Schieberboden befestigte federnde Klammer 326, die bis dahin von dem Kassettenboden niedergedrückt gehalten war, freigegeben und klemmt die führende Kante des Bildes, die die Trenneinrichtung zuerst passiert hat, gegen den Fortsatz 328 des Schiebergriffes 86. Kurz danach läuft ein seitlicher Nocken 330, der von jeder Feder 320 nach außen ragt, auf eine Nockenbahn 332 auf, längs der er nach unten gedrückt wird, so daß die Haftbeläge 322 außer Kontakt mit dem Stapel gelangen. Unten angekommen, werden die Nocken seitlich von einer oberen Schrägfläche 334 einer Längsschiene 336 nach innen ausgelenkt und gelangen unter die Schiene ; damit diese Auslenkung erfolgen kann, sitzen die Nocken auf angeschnittenen Federärmchen 338 der Federarme 320. In dieser Position hat das Gleitstück auch die Federn 314 niedergedrückt, so daß der Stapel insgesamt lose geworden ist. Unmittelbar nach dieser Position laufen die Mitnehmerhaken 312 auf eine Keilfläche 340 auf der Kassettenaußenseite auf, werden dadurch in die Durchbrüche 306 versenkt, so daß sie das Gleitstück freigeben. Bei weiterem Schieberauszug kommen schließlich dessen Hebefedern 342 vom Kassettenboden frei und können das vereinzelte Bild vor dem oberen Durchlaß der Separatorflügel 72 präsentieren, wie in Fig. 25 angedeutet. Das Zurückschieben des Gleitstücks beim Schiebereinschub erfolgt mittels des Ausschnitts 344 im Schieberboden, der komplementär zu einem Stift 346 ausgebildet ist, welcher sich mittig vom Gleitstück nach unten durch einen Schlitz 348 des Kassettenbodens erstreckt. Bei vollständig zurückgeschobenem Gleitstück kommen auch die Nocken 330 wieder von den Schienen frei, die bis dahin den Haftbelag vom Stapel im Abstand gehalten hatten.

Das Gehäuse bietet keine Besonderheiten, so daß auf seine weitere Erläuterung verzeichtet werden kann. Die Seitenkanten der in der Kassette befindlichen Bilder werden von einspringenden Fortsätzen 350 und der Innenseite der Nockenbahn 332 abgestützt.

Die Kassette kann auf der den Separatorflügeln abgewandten Seite eine durch einen Deckel verschließbare Öffnung aufweisen, durch die sie befüllt werden kann.

## Patentansprüche

1. Bildbetrachtungsgerät für rechteckige, gleichformatige Bilder mit einem Sichtfenster (40), hinter dem ein Stapel (38) von Bildern liegt, mit einem ersten (30, 32) und einem zweiten (32, 30) Rahmenteil, die relativ zueinander und parallel zur Fensterebene auseinanderziehbar und zusammenschiebbar sind, und mit Mitteln, die bei einer Hinundherbewegung der Rahmenteile ein Einzelbild an einer Stapelseite abnehmen und an der andern Stapelseite wiederzufügen, wobei beim Auseinanderziehen der Rahmenteile das erste Rahmenteil das Einzelbild mitnimmt und das zweite Rahmenteil den Reststapel abstützt, dadurch gekennzeichnet, daß eine den Bilderstapel enthaltende, entnehmbare, dem zweiten Rahmenteil zugeordnete Kassette (34) vorgesehen ist, die an einer dem ersten Rahmenteil zugewandten Stapelstirnseite eine Bildabzugsöffnung (210) und eine Bildrückführöffnung (236) aufweist, die auf der dem Sichtfenster zugewandten Seite offen (44) ist und die Einzelblatt-Mitnahmemittel (82, 140, 322) mit dem Stapel in Wirkverbindung treten läßt.

2. Gerät nach Anspruch 1, dadurch gekennzeichnet, daß das zweite Rahmenteil als Reststapel-Abstützmittel einen Separatorsteg (72) aufweist und die Kassette (34) eine diesem zugekehrte offene Stirnseite aufweist.

3. Gerät nach Anspruch 2, dadurch gekennzeichnet, daß die offene Stirnseite der Kassette (34) durch einen beweglichen Deckel (50) verschließbar ist.

4. Gerät nach Anspruch 3, dadurch gekennzeichnet, daß der Deckel ein Klappdeckel (50) ist.

5. Gerät nach Anspruch 4, dadurch gekennzeichnet, daß der Klappdeckel in einer Aussparung (69) des zweiten Rahmenteils (32) in seiner Öffnungsposition abgestützt ist.

6. Gerät nach Anspruch 1, dadurch gekennzeichnet, daß die Reststapel-Abstützmittel (72) in der Kassette (34) vorgesehen sind.

7. Gerät nach Anspruch 6, dadurch gekennzeichnet, daß die Reststapel-Abstützmittel als Separatorstegelemente (72) ausgebildet sind.

8. Gerät nach Anspruch 1, dadurch gekennzeichnet, daß die Kassette (34) eine Durchtrittsöffnung für im ersten Rahmenteil (30) angeordnete Einzelblatt-Mitnahmemittel (82, 140) aufweist.

9. Gerät nach Anspruch 8, dadurch gekennzeichnet, daß die Durchtrittsöffnung der Kassette (34) sich über die gesamte Länge des Bewegungshubes der Rahmenteile (30, 32) erstreckt.

10. Gerät nach Anspruch 1, dadurch gekennzeichnet, daß die Kassette (34) Einzelblatt-Mitnahmemittel (312) enthält, die mit dem ersten Rahmenteil (30) kuppelbar sind.

11. Gerät nach Anspruch 10, dadurch gekennzeichnet, daß das erste Rahmenteil Einzelbild-Haltemittel (326) aufweist.

12. Gerät nach Anspruch 1, bei dem eine Federandruckanordnung (84, 138/142, 216, 314/322) bei zusammengeschobenen Rahmenteilen den Stapel (38) gegen das Sichtfenster (40) drückt, dadurch gekennzeichnet, daß die Andruckanordnung im ersten Rahmenteil angeordnet ist und die Kassette (34) Durchtrittsöffnungen aufweist, durch die hindurch die Andruckanordnung mit dem Stapel in Wirkverbindung steht.

13. Gerät nach Anspruch 1, bei dem eine Federandruckanordnung (84, 138/142, 314/322) bei zusammengeschobenen Rahmenteilen den Stapel (38) gegen das Sichtfenster (40) drückt, dadurch gekennzeichnet, daß die Andruckanordnung mindestens teilweise in der Kassette (34) untergebracht ist.

14. Gerät nach Anspruch 13, dadurch gekennzeichnet, daß die gesamte Andruckanordnung in der Kassette (34) untergebracht ist.

15. Gerät nach Anspruch 13, daß ein anderer Teil der Andruckanordnung in einem der Rahmenteile untergebracht ist.

16. Gerät nach Anspruch 1, dadurch gekennzeichnet, daß die Kassette (34) in einen eines der Rahmenteile bildenden Schieber (32) einsetzbar ist, wenn dieser aus einem das erste Rahmenteil bildenden Gehäuse (30) herausgezogen ist.

17. Gerät nach Anspruch 16, dadurch gekennzeichnet, daß die Kassette sich beim Einsetzen in den Schieber selbsttätig verriegelt.

18. Gerät nach Anspruch 1, bei dem eines der Rahmenteile als ein mit dem Sichtfenster (40) versehenes Gehäuse (30), das andere als aus dem Gehäuse herausziehbarer Schieber (32) ausgebildet ist, dadurch gekennzeichnet, daß das Gehäuse aufklappbar ist, um die Kassette (34) einzusetzen.

19. Gerät nach Anspruch 1, bei dem eines der Rahmenteile als Gehäuse (30) mit dem Sichtfenster (40), das andere als aus dem Gehäuse herausziehbarer Schieber (32) ausgebildet ist, dadurch gekennzeichnet, daß der Schieber (32) zugleich als aus dem Gehäuse völlig entnehmbare Kassette (34) ausgebildet ist.

20. Gerät nach Anspruch 1, bei dem eines der Rahmenteile als das Sichtfenster (40) ausweisendes Gehäuse (30) ausgebildet ist, dadurch gekennzeichnet, daß das Gehäuse eine sich quer zur Sichtfensterebene erstreckende Öffnung aufweist, in die die Kassette (34) einschiebbar ist.

21. Gerät nach Anspruch 1, dadurch gekennzeichnet, daß die Bildöffnungen der Kassette (34) sich bei Entnehmen der Kassette selbsttätig schließen.

22. Gerät nach Anspruch 1, dadurch gekennzeichnet, daß die Kassette (34) nur in ihrer funktionell richtigen Position in das Gerät einsetzbar ist.

23. Gerät nach Anspruch. 1, dadurch gekennzeichnet, daß die Kassette (34) eine verschließbare Stapeleinsetzöffnung aufweist.

24. Gerät nach Anspruch 23, dadurch gekennzeichnet, daß die Bildabzugsöffnung und die Bildrückführöffnung der Kassette (34) Teil der Stapeleinsetzöffnung sind.

## Claims

1. Picture viewing device for rectangular pictures of like format, having a viewing window (40), behind which there lies a pile (38) of pictures, with a first (30, 32) and a second (32, 30) frame part which are able to be pulled apart and pushed back together relative to one another and parallel to the plane of the window, and with means which, upon a movement of the frame parts backwards and forwards remove an individual picture at one side of the pile and add it to the other side of the pile, wherein, as the frame parts are pulled apart, the first frame part carries the individual picture with it and the second frame part supports the remainder of the pile, characterized in that a removable container (34) containing the pile of pictures and assigned to the second frame part is provided, which container at an end of the pile facing towards the first frame part has a picture withdrawal opening (210) and a picture return opening (236), which on the side (44) facing towards the viewing window is open, and which allows transporting means (82, 140, 322) for an individual picture to engage operatively with the pile.

2. Device according to claim 1, characterized in that the second frame part has a separator bar (72) as the supporting means for the remainder of the pile and the container (34) has an open end face facing this.

3. Device according to claim 2, characterized in that the open end face of the container (34) is closeable by a movable cover (50).

4. Device according to claim 3, characterized in that the cover is a flap (50).

5. Device according to claim 4, characterized in that the flap is supported in a recess (69) of the second frame part (32) in its open position.

6. Device according to claim 1, characterized in that the means (72) for supporting the remainder of the pile are provided in the container (34).

7. Device according to claim 6, characterized in that the means for supporting the remainder of the pile are constructed as separator bar elements (72).

8. Device according to claim 1, characterized in that the container (34) has a pass-through opening for transporting means (82, 140) for the individual sheet arranged in the first frame part (30).

9. Device according to claim 8, characterized in that the pass-through opening of the container (34) extends for the entire length of the path of movement of the frame parts (30, 32).

10. Device according to claim 1, characterized in that the container (34) contains transporting means (312) for the individual sheet which is able to be coupled with the first frame part (30).

11. Device according to claim 10, characterized in that the first frame part has holding means (326) for the individual sheet.

12. Device according to claim 1, in which an arrangement of contact pressure springs (84, 138/142, 216, 314/322) presses the pile (38) against the viewing window (40) when the frame parts have been pushed together, characterized in that the contact pressure arrangement is arranged in the first frame part and the container (34) has pass-through openings through which the contact pressure arrangement is in operative connection with the pile.

13. Device according to claim 1, in which an arrangement of contact pressure springs (84, 138/142, 314/322) presses the pile (38) against the viewing window (40) when the frame parts have been pushed together, characterized in that the contact pressure arrangement is housed at least partly in the container (34).

14. Device according to claim 13, characterized in that the entire contact pressure arrangement is housed in the container (34).

15. Device according to claim 13, characterized in that another part of the contact pressure arrangement is housed in one of the frame parts.

16. Device according to claim 1, characterized in that the container (34) is able to be inserted into a slider member (32) forming one of the frame parts when this is pulled out of a housing (30) forming the first frame part.

17. Device according to claim 16, characterized in that the container locks automatically as it is inserted into the slider member.

18. Device according to claim 1, in which one of the frame parts is constructed as a housing (30) provided with the viewing window (40), and the other is constructed as a slider member (32) which is able to be withdrawn from the housing, characterized in that the housing can be opened up in order to insert the container (34).

19. Device according to claim 1, in which one of the frame parts is constructed as a housing (30) with the viewing window (40) and the other is constructed as a slider member (32) which is able to be withdrawn from the housing, characterized in that the slider member (32) is at the same time constructed as a container (34) which is able to be completely removed from the housing.

20. Device according to claim 1, in which one of the frame parts is constructed as a housing (30) having the viewing window (40), characterized in that, extending transversely to the plane of the viewing window, the housing has an opening into which the container (34) may be inserted.

21. Device according to claim 1, characterized in that the picture openings in the container (34) close automatically on removal of the container.

22. Device according to claim 1, characterized in that the container (34) is able to be inserted into the device only in the position in which it functions correctly.

23. Device according to claim 1, characterized in that the container (34) has a closeable opening for the insertion of the pile.

24. Device according to claim 23, characterized in that the picture withdrawal opening and the picture return opening of the container (34) are part of the pile insertion opening.

## Revendications

1. Dispositif d'observation d'une image, destiné à des images rectangulaires de même format, comportant une fenêtre de vision (40) derrière laquelle est disposée une pile (38) d'images, comportant une première (30, 32) et une deuxième (32, 30) parties de cadre, qui peuvent être retirées l'une hors de l'autre ou glissées l'une dans l'autre parallèlement au plan de la fenêtre, et comportant des moyens qui, grâce à un mouvement de va-et-vient des éléments de cadre, prélèvent une image individuelle sur un côté de pile et la ramènent sur l'autre côté de pile, la première partie de cadre entraînant l'image individuelle et la deuxième partie de cadre soutenant la pile restante lorsque l'on retire les parties de cadre l'une hors de l'autre, caractérisé en ce qu'il est prévu une cassette amovible (34), contenant la pile d'images et associée à la deuxième partie de cadre, qui présente à un côté frontal de pile tourné vers la première partie de cadre un orifice (210) d'extraction d'image et un orifice (236) d'amenée en retour d'image, qui est ouvert (44) sur le côté tourné vers la fenêtre de vision et qui laisse entrer en liaison de coopération avec la pile les moyens d'entraînement (82, 140, 322) de feuille individuelle.

2. Dispositif selon la revendication 1, caractérisé en ce que la deuxième partie de cadre présente comme moyen de support de la pile restante, une entretoise séparatrice (72) et que la cassette (34) présente un côté frontal ouvert tourné vers celle-ci.

3. Dispositif selon la revendication 2, caractérisé en ce que le côté frontal ouvert de la cassette (34) peut être fermé par un couvercle mobile (50).

4. Dispositif selon la revendication 3, caractérisé en ce que le couvercle est un couvercle (50) à ressort.

5. Dispositif selon la revendication 4, caractérisé en ce que le couvercle à ressort s'appuie, dans sa position d'ouverture, dans un évidement (69) de la deuxième partie de cadre (32).

6. Dispositif selon la revendication 1, caractérisé en ce que les moyens d'appui (72) de la pile restante sont prévus dans la cassette (34).

7. Dispositif selon la revendication 6, caractérisé en ce que les moyens d'appui de la pile restante consistent en éléments (72) d'entretoise séparatrice.

8. Dispositif selon la revendication 1, caractérisé en ce que la cassette (34) présente un orifice de passage pour des moyens (82, 140) d'entraînement de feuilles individuelles disposés dans la première partie de cadre (30).

9. Dispositif selon la revendication 8, caractérisé en ce que l'orifice de passage de la cassette (34) s'étend sur toute la longueur de la course de mouvement des parties de cadre (30, 32).

10. Dispositif selon la revendication 1, caractérisé en ce que la cassette (34) contient des moyens d'entraînement (312) de feuilles individuelles, qui peuvent être accouplés à la première partie de cadre (30).

11. Dispositif selon la revendication 10, caractérisé en ce que la première partie de cadre comporte des moyens de maintien (326) d'images individuelles.

12. Dispositif selon la revendication 1, dans lequel un dispositif élastique d'appui (84, 138/142, 216, 314/322) appuie la pile (38) contre la fenêtre de vision (40) lorsque les parties de cadre sont coulissées l'une dans l'autre, caractérisé en ce que le dispositif d'appui est disposé dans la première partie de cadre et la cassette (34) comporte des orifices de passage à travers lesquels le dispositif d'appui se trouve liaison de coopération avec la pile.

13. Dispositif selon la revendication 1, dans lequel un dispositif élastique d'appui (84, 138/142, 314/322) appuie la pile (38) contre la fenêtre de vision (40) lorsque les parties de cadre sont coulissées l'une dans l'autre, caractérisé en ce que le dispositif d'appui est au moins partiellement logé dans la cassette (34).

14. Dispositif selon la revendication 1, caractérisé en ce que tout le dispositif d'appui est logé dans la casstte (34).

15. Dispositif selon la revendication 13, caractérisé en ce qu'une autre partie du dispositif d'appui est logé dans l'une des parties de cadre.

16. Dispositif selon la revendication 1, caractérisé en ce que la cassette (24) peut être introduite dans un tiroir (32) constituant l'une des parties de cadre, lorsque celui-ci est tiré hors d'un boîtier (30) constituant la première partie de cadre.

17. Dispositif selon la revendication 16, caractérisé en ce que la cassette se verrouille automatiquement lors de l'introduction dans le tiroir.

18. Dispositif selon la revendication 1, dans lequel l'une des parties de cadre consiste en un boîtier (30) pourvu de la fenêtre de vision (40), en ce que l'autre partie est constituée par le tiroir (32) qui peut être tiré hors du boîtier, caractérisé en ce que le boîtier peut être relevé pour introduire la cassette (34).

19. Dispositif selon la revendication 1, dans lequel l'une des parties de cadre consiste en un boîtier (30) qui comporte la fenêtre de vision (40), en ce que l'autre est constituée par le tiroir (32) qui peut être tiré hors du boîtier, caractérisé en ce que le tiroir (32) consiste aussi en une cassette (34) totalement enlevable hors du boîtier.

20. Dispositif selon la revendication 1, dans lequel l'une des parties de cadre est constituée par le boîtier (30) qui comporte la fenêtre de vision (40), caractérisé en ce que le boîtier présente une ouverture s'étendant transversablement au plan de la fenêtre de vision, dans laquelle la cassette (34) peut être coulissée.

21. Dispositif selon la revendication 1, caractérisé en ce que les orifices d'image de la cassette (34) se ferment automatiquement lors de l'enlèvement de la cassette.

22. Dispositif selon la revendication 1, caractérisé en ce que la cassette (34) ne peut être introduite dans le dispositif que dans sa position fonctionnellement correcte.

23. Dispositif selon la revendication 1, caractérisé en ce que la cassette (34) présente un orifice d'introduction de pile qui peut être fermé.

24. Dispositif selon la revendication 23, caractérisé en ce que l'orifice d'extraction d'image et l'orifice d'amenée en retour d'image de la cassette (34) font partie de l'orifice d'introduction de pile.

## Fig. 2

69 58 74 50 52 42 40 44 38 42 70 32

68 72 60

30 78 54 80 56 66 36 64 34 46 82

68 69 32 30

66 64 36 40 60 70

72 42 86

50 76 44

64 42 66 36 70

58 52 68 69 62 60 34

## Fig. 1

**Fig. 3**

**Fig. 4**

**Fig. 5**

**Fig. 6**

**Fig. 7**

_Fig. 9_

40

30

124

126

126

124

76

76

76

36

122

120

130

130

130

130

148

132

86

44

36

32;34

50

52

_Fig. 8_

**Fig. 10**

**Fig. 11**

**Fig. 12**

_Fig. 13_

_Fig. 14_

*Fig. 15*

*Fig. 17*

*Fig. 16*

*Fig. 18*

*Fig. 19*

*Fig. 20*

Fig. 21

EP 0 252 106 B1

Fig. 22

Fig. 23

_Fig. 24._

_Fig. 25_

*Fig. 26*

*Fig. 27*